# EUROPEAN PATENT APPLICATION

(11) **EP 4 545 780 A1**
(43) Date of publication of application: **30.04.2025**
(21) Application number: 24196130.9
(22) Date of filing: 23.08.2024
(51) Int. Cl.: F02M 35/10

(54) **SENSOR UNIT AND INTAKE SYSTEM OF INTERNAL COMBUSTION ENGINE**

(30) Priority: 27.10.2023 JP 2023184478
(71) Applicant: MIKUNI CORPORATION, Chiyoda-ku Tokyo 101-0021 (JP)
(72) Inventor: SEKIGUCHI, Shinichi, Odawara-shi, Kanagawa, 2500055 (JP); KITAOKA, Tatsuya, Odawara-shi, Kanagawa, 2500055 (JP); SUGIZAKI, Yuuta, Odawara-shi, Kanagawa, 2500055 (JP)
(74) Representative: Kurig, Thomas

(57) **Abstract**

A sensor unit (U) is arranged in an intake pipe (Ip) of an internal combustion engine (E). The sensor unit (U) includes: a pressure sensor (20), detecting a pressure of intake air in the intake pipe (Ip); and a case (10), including a first accommodation part (13) and a communication path, the first accommodation part (13) accommodating the pressure sensor (20), the communication path providing communication between a pressure receiving chamber (Rc) of the pressure sensor (20) and an intake passage (Ip₁) of the intake pipe (Ip). The communication path includes a first communication path (Cp 1) and a second communication path (Cp2), the first communication path (Cp1) having a predetermined passage length (Lo), the second communication path (Cp2) having the same passage length (Lo) as the first communication path (Cp1) and including a region having passage area smaller than passage area of the first communication path (Cp1).

## Description

### Technical Field

The present disclosure relates to a sensor unit which is applied to an intake system of an internal combustion engine mounted on an automobile, a motorcycle, or any other vehicle and detects a state quantity (pressure, temperature) of intake air, and relates to an intake system of an internal combustion engine.

### Related Art

As a conventional sensor unit, a temperature sensor-integrated pressure sensor device has been known which includes: a case, where a terminal is inserted; a pressure detection element, connected to the terminal and arranged within the case; a port, connected to the case and having a pressure introduction hole leading to a pressure receiving chamber of the pressure detection element; and a temperature detection element, connected to the terminal and provided in the port (for example, see Japanese Patent Laid-open No. 2006-194683 and Japanese Patent Laid-open No. 2005-274412).

In the above temperature sensor-integrated pressure sensor device, the pressure introduction hole formed in the port is formed as one linear passage having relatively large passage area. Accordingly, in the case where foreign matter is present within an intake manifold, there is a risk that the foreign matter may enter the pressure receiving chamber through the pressure introduction hole, and a pressure of intake air cannot be accurately detected.

As another sensor unit, a pressure sensor device has been known which includes: a sensor storage container, including a base and a box-shaped housing; a pressure detection element, arranged within the housing; a pressure introduction path, formed by the base and a pipe and leading to a pressure introduction chamber of the pressure detection element; a temperature sensor, arranged within a temperature sensor storage protrusion formed on the base; and a circuit board, to which the pressure detection element and the temperature sensor are electrically connected, and arranged within the housing (for example, see Japanese Patent Laid-open No. H11-30535).

In the above pressure sensor device, in order to prevent the foreign matter from entering the pressure introduction chamber through the pressure introduction path, in the vicinity of an open end of the pressure introduction path, a labyrinth structure is formed whose passage area is reduced. Accordingly, in a region of this labyrinth structure, there is a risk that a liquid, for example, a liquid or liquid-like substance such as fuel caused by blowback, moisture in intake air, and blow-by gas, may adhere to the inside of a passage or freeze when it is cold, the passage may be further narrowed or blocked, and a pressure of intake air cannot be accurately detected.

### SUMMARY

### Problems to Be Solved by the Invention

The present disclosure has been made in view of the above circumstances, and an object thereof is to provide a sensor unit, and an intake system of an internal combustion engine, in which entry of foreign matter can be suppressed or prevented, adhesion or freezing of a liquid or liquid-like substance such as fuel, moisture in intake air, and blow-by gas can be suppressed or prevented, and a pressure of intake air can be detected with high accuracy.

### Means for Solving the Problems

A sensor unit of the present disclosure is a sensor unit arranged in an intake pipe of an internal combustion engine. The sensor unit is configured to include: a pressure sensor, detecting a pressure of intake air in the intake pipe; and a case, including a first accommodation part and a communication path, the first accommodation part accommodating the pressure sensor, the communication path providing communication between a pressure receiving chamber of the pressure sensor and an intake passage of the intake pipe. The communication path includes a first communication path and a second communication path, the first communication path having a predetermined passage length, the second communication path having the same passage length as the first communication path and including a region having passage area smaller than passage area of the first communication path.

In the above sensor unit, the following configuration may be adopted. The first communication path includes a first passage and a first ventilation hole, the first passage having predetermined passage area, the first ventilation hole leading to the first passage and having opening area smaller than the passage area of the first passage. The second communication path includes a second passage and a second ventilation hole, the second passage having the same passage length and passage area as the first passage, the second ventilation hole leading to the second passage and having opening area smaller than the opening area of the first ventilation hole.

In the above sensor unit, the following configuration may be adopted. The first ventilation hole and the second ventilation hole are formed as circular holes. An inner diameter of the second ventilation hole is smaller than an inner diameter of the first ventilation hole.

In the above sensor unit, the following configuration may be adopted. The first communication path and the second communication path are formed to open to the intake passage in positions adjacent to each other.

In the above sensor unit, the following configuration may be adopted. The pressure sensor includes a sensor body and a sensor cover, the sensor body including a pressure receiving part, the sensor cover being connected to the sensor body to cover the pressure receiving part and define the pressure receiving chamber. The first ventilation hole and the second ventilation hole are formed in the sensor cover.

In the above sensor unit, the following configuration may be adopted. The first ventilation hole and the second ventilation hole are formed in an offset manner close to a side part outside a central region of the pressure receiving chamber.

In the above sensor unit, the following configuration may be adopted. The case includes a case body and a sleeve, the case body including a joint surface joined to the intake pipe, the sleeve having a cylindrical shape protruding in a predetermined axis direction from the case body. The first passage and the second passage are formed to extend within the sleeve.

In the above sensor unit, the following configuration may be adopted. The first passage and the second passage are formed to be adjacent to each other at an open end of the sleeve and to open to the intake passage.

In the above sensor unit, the following configuration may be adopted. The sensor unit includes a temperature sensor that detects a temperature of the intake air in the intake pipe. The case includes a second accommodation part that accommodates the temperature sensor.

In the above sensor unit, the following configuration may be adopted. The case includes a case body and a sleeve, the case body including a joint surface joined to the intake pipe, the sleeve having a cylindrical shape protruding in a predetermined axis direction from the case body. The first passage, the second passage, and the second accommodation part are formed to extend within the sleeve.

In the above sensor unit, the following configuration may be adopted. The sleeve includes an end face and a tip outer wall, the end face being where the first passage and the second passage open to the intake passage, the tip outer wall being formed to protrude from the end face and defining an outer wall of the second accommodation part.

In the above sensor unit, the following configuration may be adopted. The sensor unit includes a circuit board to which the pressure sensor and the temperature sensor are electrically connected. The case includes a third accommodation part that accommodates the circuit board.

In the above sensor unit, the following configuration may be adopted. The first accommodation part, the second accommodation part, and the third accommodation part, with the pressure sensor, the temperature sensor, and the circuit board respectively arranged therein, are sealed by filling a mold resin material.

In the above sensor unit, the following configuration may be adopted. The case includes a connector that exposes and surrounds a plurality of terminals connected to wiring on the circuit board and is connected to the outside.

In the above sensor unit, the following configuration may be adopted. The case includes a case body, a sleeve, and an annular groove, the case body including a joint surface joined to the intake pipe, the sleeve having a cylindrical shape protruding in a predetermined axis direction from the case body, the annular groove being formed on an outer periphery of the sleeve and allowing an annular seal member to be fitted therein.

In the above sensor unit, the following configuration may be adopted. The sleeve includes a large-diameter cylindrical part continuous with the joint surface and a small-diameter cylindrical part continuous with the large-diameter cylindrical part. The annular groove is formed in the large-diameter cylindrical part.

An intake system of an internal combustion engine of the present disclosure is configured to include: an intake pipe, defining an intake passage that guides intake air to a combustion chamber of the internal combustion engine; a fuel injection valve, injecting fuel to middle of the intake passage or to the combustion chamber; a throttle device, provided in middle of the intake pipe, opening and closing the intake passage; and a sensor unit, detecting a state quantity of the intake air. As the sensor unit, a sensor unit having any of the above configurations is adopted.

In the above intake system of an internal combustion engine, the following configuration may be adopted. The sensor unit is arranged in the intake pipe downstream of the throttle device.

### Effects of the Invention

According to the sensor unit having the above configuration, entry of foreign matter can be suppressed or prevented, adhesion or freezing of a liquid or liquid-like substance such as fuel, moisture in intake air, and blow-by gas can be suppressed or prevented, and a state quantity (pressure, temperature) of the intake air can be detected with high accuracy.

### BRIEF DESCRIPTION OF THE DRAWINGS

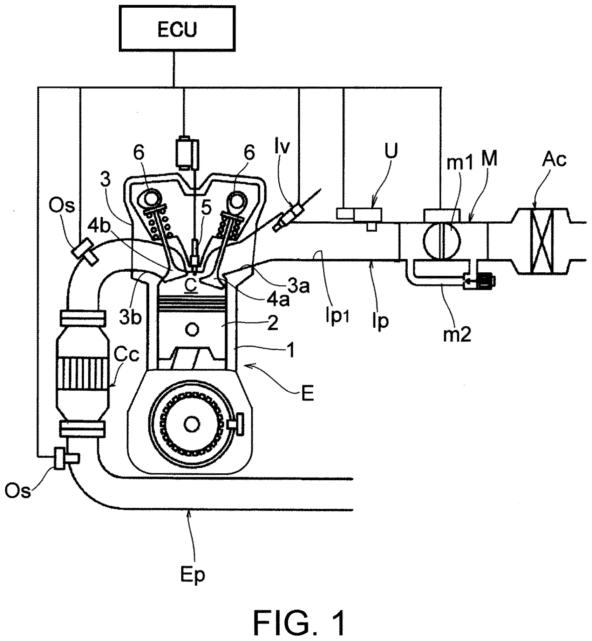

FIG. 1 is a system diagram showing an intake system of an internal combustion engine to which a sensor unit according to one embodiment of the present disclosure is applied.
FIG. 2 shows the sensor unit according to one embodiment, and is an external perspective view of a case as viewed from the outside.
FIG. 3 shows the sensor unit according to one embodiment, and is an external perspective view as viewed from a joint surface side of the case joined to an intake pipe.
FIG. 4 shows the sensor unit according to one embodiment, and is a plan view of the joint surface of the case joined to the intake pipe.
FIG. 5 is a partial cross-sectional view showing a state in which the sensor unit according to one embodiment is attached to the intake pipe.
FIG. 6 is an exploded perspective view of the sensor unit according to one embodiment, as viewed from one side.
FIG. 7 is an exploded perspective view of the sensor unit according to one embodiment, as viewed from the other side.
FIG. 8 is a perspective cross-sectional view of the sensor unit according to one embodiment, taken along a plane passing through a center line of a first ventilation hole and a center line of a second ventilation hole.
FIG. 9 is a cross-sectional view of the sensor unit according to one embodiment, taken along a plane including a center line of a first passage forming a first communication path and the center line of the first ventilation hole.
FIG. 10 is a cross-sectional view of the sensor unit according to one embodiment, taken along a plane including a center line of a second passage forming a second communication path and the center line of the second ventilation hole.
FIG. 11 is a perspective cross-sectional view of a pressure sensor (sensor body, sensor cover) in the sensor unit according to one embodiment.
FIG. 12 is an exploded perspective view of a sensor body and a sensor cover that constitute the pressure sensor in the sensor unit according to one embodiment.
FIG. 13 is a cross-sectional view showing a temperature sensor accommodated in a second accommodation part in the sensor unit according to one embodiment.
FIG. 14 is a schematic diagram describing a flow of intake air in a communication path (first communication path including first passage and first ventilation hole, and second communication path including second passage and second ventilation hole) that provides communication between a pressure receiving chamber and an intake passage in the sensor unit according to one embodiment.
FIG. 15 is a schematic diagram describing a flow of intake air in the communication path (first communication path including first passage and first ventilation hole, and second communication path including second passage and second ventilation hole) that provides communication between the pressure receiving chamber and the intake passage in a sensor unit according to another embodiment.
FIG. 16 is a schematic diagram describing a flow of intake air in the communication path (first communication path, second communication path) that provides communication between the pressure receiving chamber and the intake passage in a sensor unit according to still another embodiment.

### DESCRIPTION OF THE EMBODIMENTS

Hereinafter, embodiments of the present disclosure will be described with reference to the accompanying drawings.

A sensor unit U of the present disclosure is incorporated into, for example, an intake system of an internal combustion engine E mounted on a vehicle such as an automobile or a motorcycle.

The internal combustion engine E includes: a cylinder block 1; a piston 2; a cylinder head 3; an intake valve 4a, opening and closing an intake port 3a; an exhaust valve 4b, opening and closing an exhaust port 3b; a spark plug 5; a cam mechanism 6, driving the intake valve 4a and the exhaust valve 4b; and so on.

The intake system of the internal combustion engine E includes: an intake pipe Ip, connected to the cylinder head 3 in order to lead to the intake port 3a; a throttle device M, connected to the middle of the intake pipe Ip; an air cleaner Ac, connected to an upstream end of the intake pipe Ip; a fuel injection valve Iv, arranged downstream of the intake pipe Ip; the sensor unit U, arranged downstream of the throttle device M and upstream of the fuel injection valve Iv in the intake pipe Ip; and so on.

The intake pipe Ip defines an intake passage Ipi that guides intake air to a combustion chamber C of the internal combustion engine E.

The throttle device M includes: a butterfly-type throttle valve m1, opening and closing the intake passage Ipi; a bypass passage m2, bypassing the throttle valve m1; and so on.

An exhaust system of the internal combustion engine E includes: an exhaust pipe Ep, connected to the cylinder head 3 in order to lead to the exhaust port 3b; a catalytic converter Cc and an oxygen sensor Os, arranged in the middle of the exhaust pipe Ep; and so on.

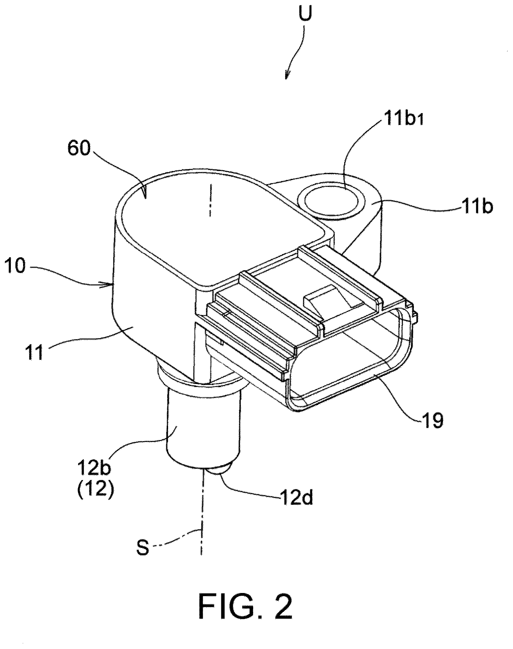

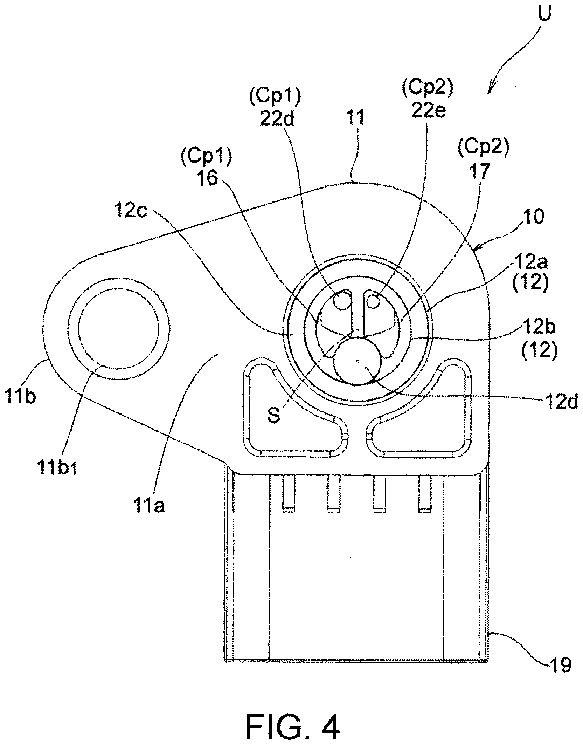

As shown in FIG. 2 to FIG. 13, the sensor unit U according to one embodiment includes a case 10, a pressure sensor 20, a temperature sensor 30, a circuit board 40, a plurality of terminals 50, a mold resin material 60, and an annular seal member 70.

The case 10 is molded using a resin material. The case 10 includes a case body 11, a sleeve 12 of a cylindrical shape, a first accommodation part 13, a second accommodation part 14, a third accommodation part 15, a first passage 16, a second passage 17, an annular groove 18, and a connector 19.

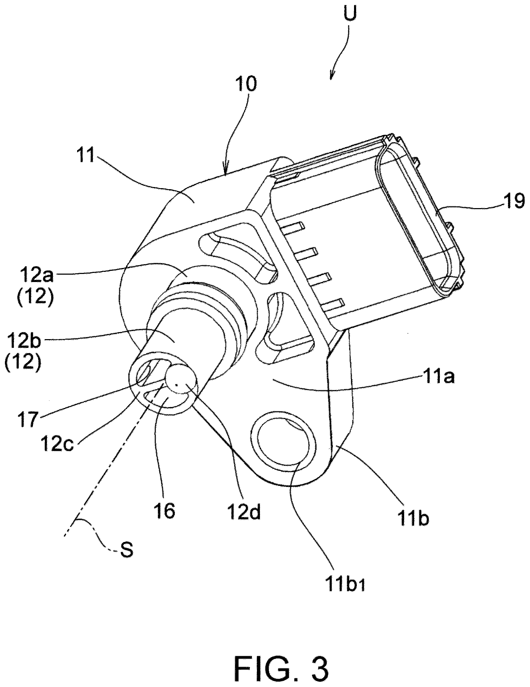

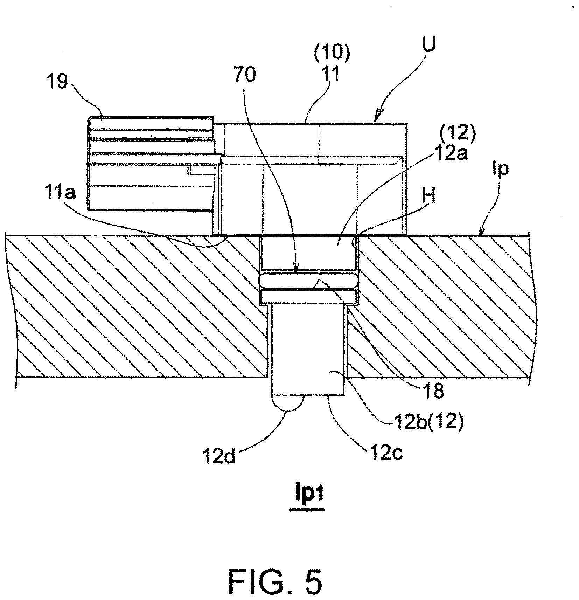

As shown in FIG. 3 and FIG. 5, the case body 11 includes: a flat joint surface 11a, joined to an outer wall of the intake pipe Ip; and a flange 11b, including a circular hole 11b₁ through which a fastening screw (not shown) that is screwed into a screw hole in the intake pipe Ip passes.

The sleeve 12 is formed in a two-step cylindrical shape extending in a direction of an axis S perpendicular to the joint surface 11a of the case body 11. That is, the sleeve 12 is formed to include a large-diameter cylindrical part 12a, and a small-diameter cylindrical part 12b continuous with the large-diameter cylindrical part 12a.

As shown in FIG. 5, with the sensor unit U assembled to the intake pipe Ip, the large-diameter cylindrical part 12a is fitted into a fitting hole H of the intake pipe Ip, and the small-diameter cylindrical part 12b is arranged in a slightly protruding manner within the intake passage Ipi of the intake pipe Ip.

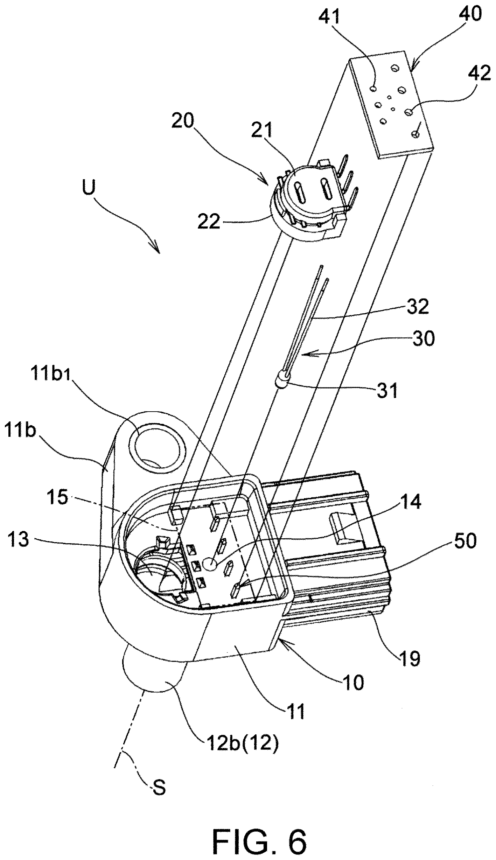

As shown in FIG. 6 and FIG. 8 to FIG. 10, the first accommodation part 13 is a region where the pressure sensor 20 is accommodated and held, and is formed in an inside region of the case body 11.

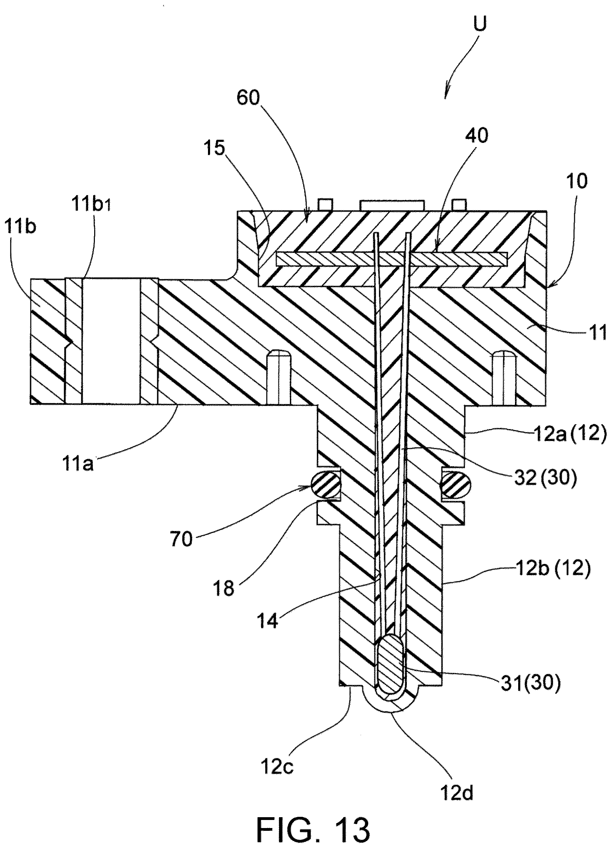

As shown in FIG. 13, the second accommodation part 14 is a region where the temperature sensor 30 is accommodated. The second accommodation part 14 is formed in a region obtained by extending an inside region of the sleeve 12 from the inside region of the case body 11 to the inside of a tip outer wall 12d of a semi-spherical shape that defines an outer wall protruding from an end face 12c of the sleeve 12.

As shown in FIG. 6, the third accommodation part 15 is a region where the circuit board 40 is accommodated and held, and is formed in the inside region of the case body 11.

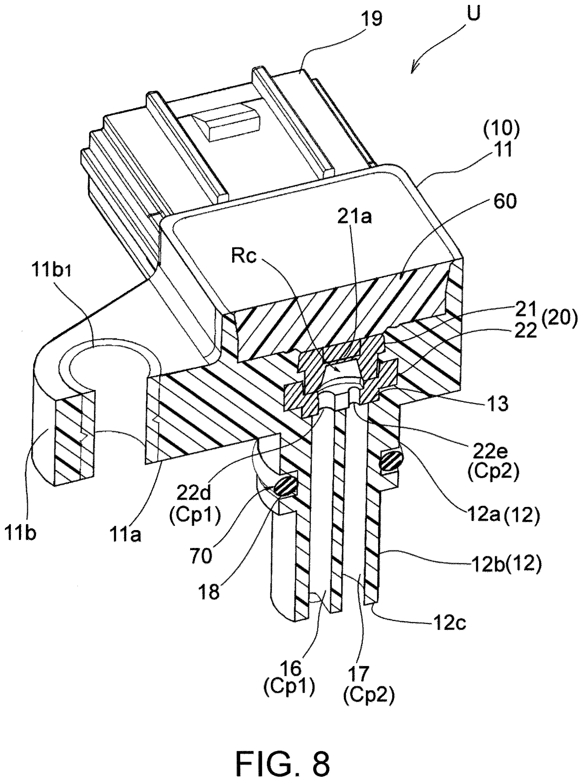

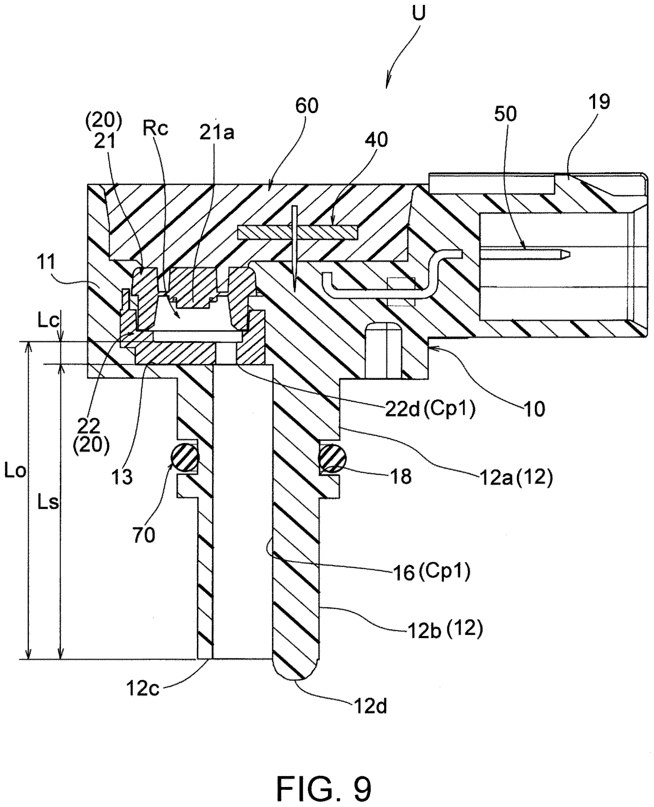

As shown in FIG. 8 and FIG. 9, on the inside of the sleeve 12, the first passage 16 is formed to extend linearly in the direction of the axis S from the end face 12c that defines an open end of the sleeve 12 to the first accommodation part 13 of the case body 11, having a predetermined passage length Ls and constant passage area. An open end on the deep side of the first passage 16 leads to a first ventilation hole 22d formed in a sensor cover 22 of the pressure sensor 20.

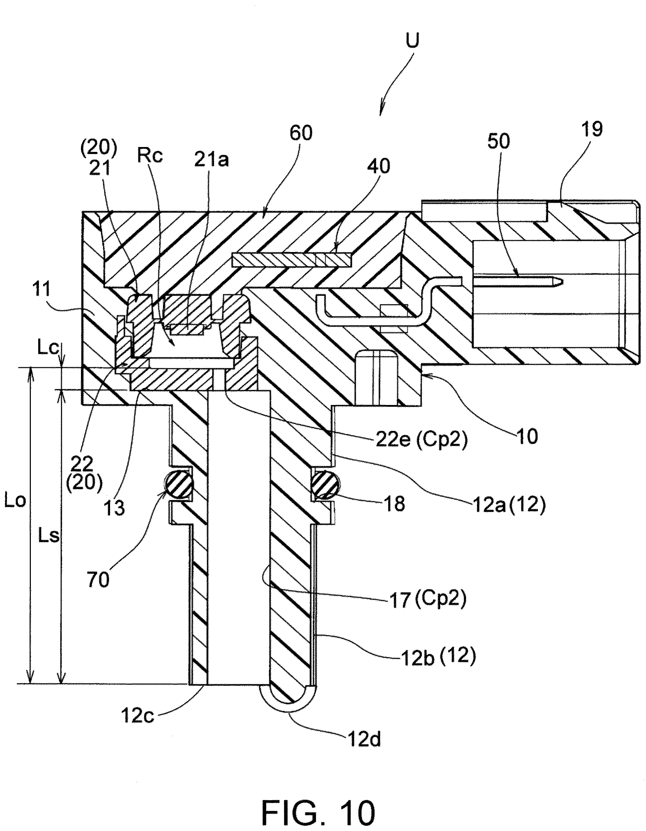

As shown in FIG. 8 and FIG. 10, on the inside of the sleeve 12, the second passage 17 is formed to extend linearly in the direction of the axis S and be adjacent to the first passage 16 from the end face 12c to the first accommodation part 13 of the case body 11, having the same passage length Ls as the first passage 16 and the same passage area as that of the first passage 16. An open end on the deep side of the second passage 17 leads to a second ventilation hole 22e formed in the sensor cover 22 of the pressure sensor 20.

That is, the first passage 16 and the second passage 17 are formed to have the same passage length Ls and the same passage area. The first passage 16 is formed to provide communication between a pressure receiving chamber Rc of the pressure sensor 20 and the intake passage Ipi of the intake pipe Ip through the first ventilation hole 22d. The second passage 17 is formed to provide communication between the pressure receiving chamber Rc of the pressure sensor 20 and the intake passage Ip₁ of the intake pipe Ip through the second ventilation hole 22e.

As shown in FIG. 5, FIG. 7, and FIG. 8, in a region of the large-diameter cylindrical part 12a of the sleeve 12 of the case 10, the annular groove 18 is formed by hollowing out an outer periphery in an annular shape for the annular seal member 70 to be fitted therein.

As shown in FIG. 9, the connector 19 protrudes in a direction perpendicular to the axis S from the case body 11, and is formed to expose and surround a plurality of (here, four) terminals 50 connected to the circuit board 40 and to be connected to the outside.

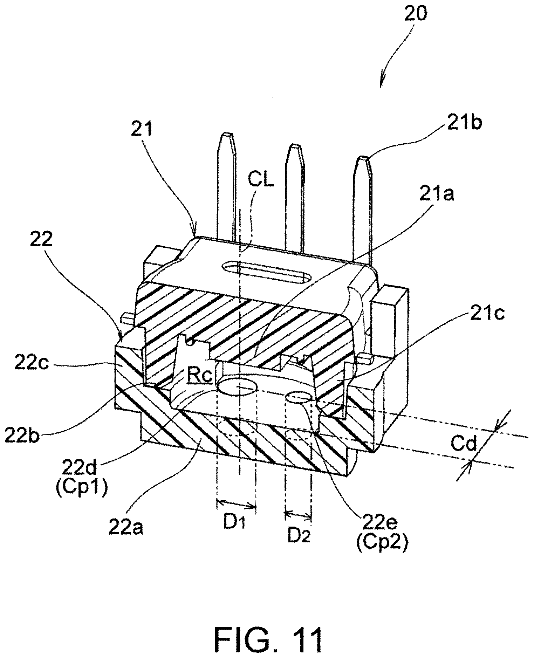

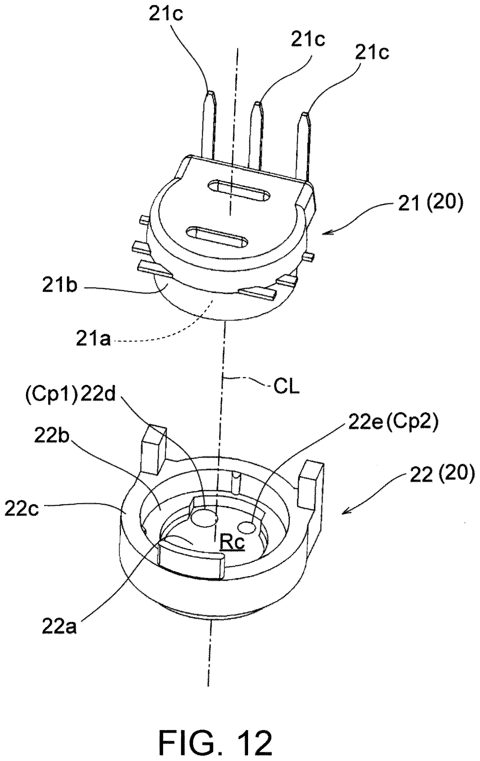

As shown in FIG. 11 and FIG. 12, the pressure sensor 20 is composed of a sensor body 21 and a sensor cover 22.

The sensor body 21 includes, for example: a pressure receiving part 21a, such as a diaphragm including a semiconductor strain gauge; a lead wire 21b, extending from the pressure receiving part 21a; and an annular part 21c, surrounding the pressure receiving part 21a.

The sensor cover 22 includes a bottom 22a of a disk shape, an annular step part 22b, an annular outer wall 22c, the first ventilation hole 22d, and the second ventilation hole 22e. In order to function as a protective cover that covers the pressure receiving part 21a and to define the pressure receiving chamber Rc, the sensor cover 22 has the annular part 21c fitted into the annular outer wall 22c and is connected to the sensor body 21.

The pressure sensor 20 outputs, as an electrical signal, a change in electrical resistance according to the amount of deformation in the pressure receiving part 21a due to a pressure of the intake air guided into the pressure receiving chamber Rc through the first ventilation hole 22d and the second ventilation hole 22e.

While the sensor unit U is assembled to the intake pipe Ip, the pressure sensor 20 may detect a pressure of the intake air flowing through the intake passage Ipi downstream of the throttle device M.

Here, as shown in FIG. 9, the first ventilation hole 22d has a passage length Lc corresponding to a wall thickness of the bottom 22a. As shown in FIG. 11, the first ventilation hole 22d constitutes a circular hole having opening area (inner diameter D₁) sufficiently smaller than the passage area of the first passage 16, and is formed to lead to the first passage 16.

As shown in FIG. 10, the second ventilation hole 22e has the passage length Lc corresponding to the wall thickness of the bottom 22a. As shown in FIG. 11, the second ventilation hole 22e constitutes a circular hole having opening area (inner diameter D₂) sufficiently smaller than the passage area of the second passage 17 and smaller than the opening area of the first ventilation hole 22d (that is, D₁>D₂), and is formed to lead to the second passage 17.

For example, the inner diameter D₂ of the second ventilation hole 22e is 0.6 to 0.7 time the inner diameter D₁ of the first ventilation hole 22d. Specifically, as an example, D₁=1.5 mm and D₂=1.0 mm.

The passage length Lc of the first ventilation hole 22d and the second ventilation hole 22e is the same as a plate thickness dimension of the bottom 22a, and is, for example, about 1.0 to 1.7 times the inner diameters D₁ and D₂.

According to the above configuration, a communication path that provides communication between the pressure receiving chamber Rc of the pressure sensor 20 and the intake passage Ip₁ of the intake pipe Ip is formed to include: a first communication path Cp1, having a predetermined passage length Lo (=Ls+Lc); and a second communication path Cp2, having the same passage length Lo (=Ls+Lc) as the first communication path Cp1 and including a region (second ventilation hole 22e) having passage area smaller than the passage area of the first communication path Cp1.

Specifically, the first communication path Cp1 is formed to include: the first passage 16, having the predetermined passage length Ls and passage area; and the first ventilation hole 22d, leading to the first passage 16, having the passage length Lc, and having the opening area smaller than the passage area of the first passage 16. The second communication path Cp2 is formed to include: the second passage 17, having the same passage length Ls and passage area as the first passage 16; and the second ventilation hole 22e, leading to the second passage 17, having the passage length Lc, and having the opening area smaller than the opening area of the first ventilation hole 22d.

Here, since the first ventilation hole 22d and the second ventilation hole 22e are formed to have opening area smaller than the passage area of the first passage 16 and the second passage 17, the first ventilation hole 22d and the second ventilation hole 22e act (trap function) to prevent foreign matter or the like mixed in with the intake air from entering the pressure receiving chamber Re.

In particular, as shown in FIG. 11, the first ventilation hole 22d and the second ventilation hole 22e are formed offset by a distance Cd in a side part outside a central region including a center line CL of the pressure receiving chamber Rc.

Accordingly, even if foreign matter or the like enters the pressure receiving chamber Rc through the first ventilation hole 22d and the second ventilation hole 22e, it is possible to prevent the foreign matter or the like from directly colliding with the pressure receiving part 21a, the influence of pressure due to impact from the foreign matter or the like or dynamic pressure according to flow velocity of intake air can be suppressed or prevented, and the pressure can be detected with high accuracy.

The second ventilation hole 22e is formed to have the opening area (inner diameter D₂) smaller than the opening area (inner diameter D₁) of the first ventilation hole 22d.

In general, when pressure loss corresponding to passage resistance is ΔP (Pa), a friction coefficient of a passage is λ (dimensionless), a passage length is L (m), an inner diameter of the passage is D (m), fluid density is ρ (kg/m³) and flow velocity is V (m/s), ΔP=λLρV²/2D is achieved. That is, the pressure loss ΔP is inversely proportional to the inner diameter D of the passage and proportional to the passage length L. Accordingly, when the passage area or the opening area decreases, the pressure loss increases. That is, the passage resistance increases, making it difficult for a fluid to flow.

Here, when the inner diameter of the first ventilation hole 22d is D₁ and the passage length of the first ventilation hole 22d is L₁, the inner diameter of the second ventilation hole 22e is D₂ and the passage length of the second ventilation hole 22e is L₂, Lc=L₂=L₁ and D₂<D₁. Thus, pressure loss ΔP₂ of the second ventilation hole 22e is greater than pressure loss ΔP₁ of the first ventilation hole 22d (ΔP₂>ΔP₁). That is, the second ventilation hole 22e is formed so as to have greater passage resistance greater than the first ventilation hole 22d.

Accordingly, the passage resistance (pressure loss) of the second communication path Cp2 leading to the pressure receiving chamber Rc through the second passage 17 and the second ventilation hole 22e is greater than the passage resistance (pressure loss) of the first communication path Cp1 leading to the pressure receiving chamber Rc through the first passage 16 and the first ventilation hole 22d.

According to the above configuration, in the vicinity of the end face 12c of the sleeve 12, in the case where a negative pressure occurs as the piston 2 is lowered, with the pressure receiving chamber Rc as the starting point, a trigger flow is generated that is drawn out from the first communication path Cp1 having small passage resistance into the intake passage Ipi, and a follow-up flow is accordingly generated that flows from the intake passage Ip₁ through the second communication path Cp2 into the pressure receiving chamber Rc.

Accordingly, in the sensor unit U, by generating an intake air flow in a communication path (first communication path Cp1 and second communication path Cp2), it can be suppressed or prevented that a liquid or liquid-like substance such as fuel, moisture in intake air, and blow-by gas adheres to the inside of the communication path, and freezing of adhered substances or the like can be prevented. Hence, the pressure sensor 20 is able to detect with high accuracy the pressure of the intake air guided to the pressure receiving chamber Rc.

Here, the first communication path Cp1 and the second communication path Cp2 open to the intake passage Ipi in positions adjacent to each other, that is, the first passage 16 and the second passage 17 are formed to open while being adjacent to each other at an open end (end face 12c) of the sleeve 12.

Accordingly, pressure atmospheres at the open ends of the first communication path Cp1 and the second communication path Cp2 become equal. Thus, a difference between the passage resistance (pressure loss) of the first communication path Cp1 and the passage resistance (pressure loss) of the second communication path Cp2 can be easily determined simply by a difference (difference in opening area) between the first ventilation hole 22d and the second ventilation hole 22e.

Since the first ventilation hole 22d and the second ventilation hole 22e are formed as circular holes, desired passage resistance (pressure loss) can be easily set by calculation in comparison with the case of irregularly shaped holes.

When the case 10 is molded from a resin material using a die, the pressure sensor 20 having the above configuration is arranged in the die and molded integrally so as to be accommodated in the first accommodation part 13 of the case body 11. The pressure sensor 20 has the lead wire 21b electrically connected to the circuit board 40, and then is covered and sealed with the mold resin material 60.

The pressure sensor 20 may, in a later process, be fitted into the first accommodation part 13 of the case 10 that has been molded in advance from a resin material, and be sealed with the mold resin material 60.

As shown in FIG. 6, FIG. 7, and FIG. 13, the temperature sensor 30 is a reed-type sensor, and is composed of, for example, a temperature sensing element 31 such as a thermistor, and a lead wire 32 extending from the temperature sensing element 31. That is, the temperature sensor 30 is inserted into the second accommodation part 14 of the case 10, has the temperature sensing element 31 arranged in an inside region of the tip outer wall 12d of the sleeve 12, has the lead wire 32 electrically connected to the circuit board 40, and is then covered and sealed with the mold resin material 60.

While the sensor unit U is assembled to the intake pipe Ip, the temperature sensor 30 may detect a temperature of the intake air flowing through the intake passage Ipi downstream of the throttle device M.

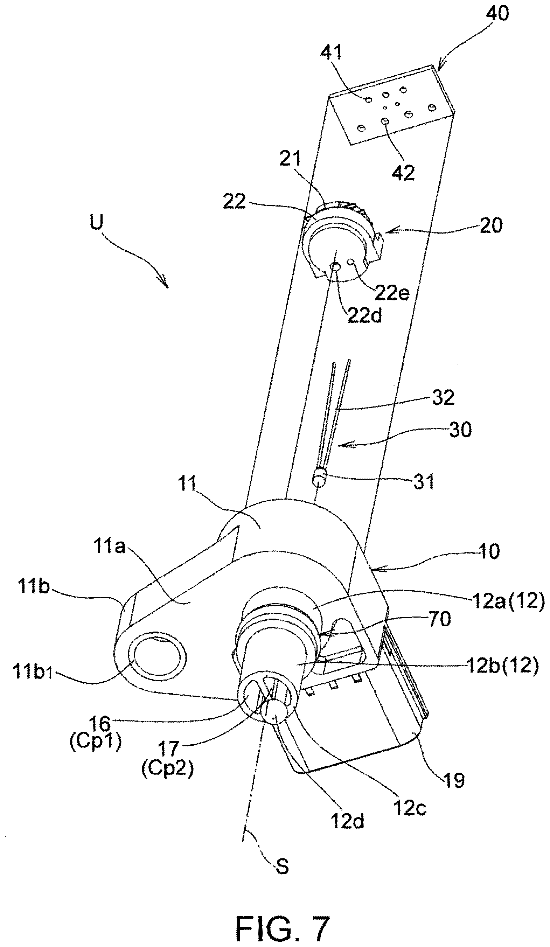

The circuit board 40 has printed wiring and various electronic components (not shown) mounted on its surface. As shown in FIG. 6 and FIG. 7, the circuit board 40 includes three through holes 41 to which the lead wire 21b of the pressure sensor 20 is electrically connected, and four through holes 42 to which the lead wire 32 of the temperature sensor 30 is electrically connected.

During assembly, the circuit board 40 is arranged in the third accommodation part 15 of the case body 11, having the lead wires 21b and 32 electrically connected thereto, and is then covered and sealed with the mold resin material 60.

The terminal 50 is made of a conductive metal material. As shown in FIG. 9 and FIG. 10, the terminal 50 is embedded in the case body 11, has one end connected to the through hole 42 of the circuit board 40, and is arranged to have its free end side exposed inside the connector 19 and surrounded by the connector 19.

The mold resin material 60 is a sealing material such as epoxy resin. With the pressure sensor 20, the temperature sensor 30, and the circuit board 40 accommodated and held in the first accommodation part 13, the second accommodation part 14, and the third accommodation part 15 of the case 10, respectively, the mold resin material 60 is injected into the case 10 to fill gaps and spaces and is solidified.

Accordingly, as shown in FIG. 8, FIG. 9, FIG. 10, and FIG. 13, the first accommodation part 13, the second accommodation part 14, and the third accommodation part 15, with the pressure sensor 20, the temperature sensor 30, and the circuit board 40 respectively arranged therein, are sealed by filling the mold resin material 60.

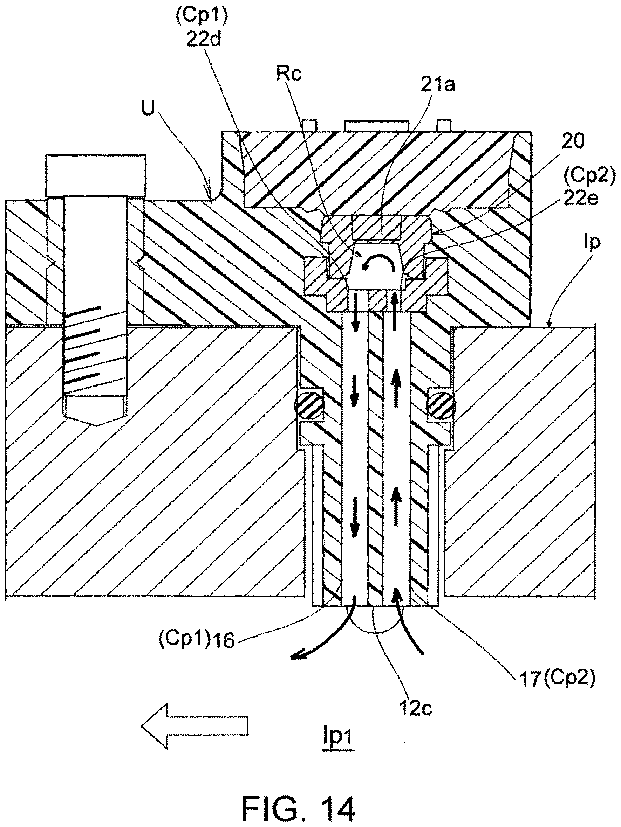

The annular seal member 70 is made of a rubber material excellent in heat resistance, swelling resistance and so on. As shown in FIG. 13 and FIG. 14, the annular seal member 70 is formed in an annular shape, and is fitted into the annular groove 18 formed on the outer periphery of the sleeve 12 of the case 10.

As shown in FIG. 5, the annular seal member 70 seals between the fitting hole H of the intake pipe Ip and the sleeve 12 while the sensor unit U is assembled to the intake pipe Ip.

Next, in the internal combustion engine E equipped with the sensor unit U, a detection operation of the sensor unit U will be described.

First, when the internal combustion engine E is in an idle operating range, the throttle valve m1 has closed the intake passage Ipi. The intake air flowing through the intake passage Ip₁ flows through the bypass passage m2 so as to bypass the throttle valve m1, and then flows out again into the intake passage Ipi on the downstream side.

On the other hand, when the internal combustion engine E is in an operating range other than the idle operating range, the throttle valve m1 is in a predetermined opening degree range and has opened the intake passage Ipi.

Accordingly, the intake air flowing through the intake passage Ipi flows through the intake passage Ipi and is drawn into the internal combustion engine E, without passing through the bypass passage m2.

In an operating state of the internal combustion engine E, a pressure and a temperature, which are state quantities of the intake air, are detected by the sensor unit U downstream of the throttle device M.

That is, the temperature of the intake air is detected by the temperature sensor 30. Specifically, since the temperature sensing element 31 is arranged in the vicinity of the inside of the tip outer wall 12d protruding from the end face 12c of the sleeve 12, the temperature of the intake air flowing through the intake passage Ipi may be detected in a region away from a wall surface of the intake pipe Ip. Accordingly, the influence of the temperature of the wall surface of the intake pipe Ip can be suppressed.

By the pressure sensor 20, the pressure of the intake air flowing through the intake passage Ipi through the first communication path Cp1 including the first passage 16 and the first ventilation hole 22d and the second communication path Cp2 including the second passage 17 and the second ventilation hole 22e is detected.

Specifically, when comparing the case of flow between the first communication path Cp1 and the second communication path Cp2, since the second communication path Cp2 includes the second ventilation hole 22e having large passage resistance (pressure loss), flowing is facilitated in the first communication path Cp1 than in the second communication path Cp2.

Accordingly, as shown in FIG. 14, the intake air in the pressure receiving chamber Rc is drawn out into the intake passage Ipi through the first communication path Cp1. In conjunction with this flow of intake air, the intake air in the intake passage Ipi flows into the pressure receiving chamber Rc through the second communication path Cp2.

By continuous execution of this flow, the intake air is supplied into the pressure receiving chamber Rc, and the pressure of the intake air is detected by the pressure receiving part 21a. By this flow of intake air, it can be suppressed or prevented that a liquid or liquid-like substance such as fuel, moisture in intake air, and blow-by gas adheres to an inner wall surface of the first communication path Cp1 and the second communication path Cp2. Hence, freezing of the liquid or liquid-like substance can be suppressed or prevented. By the first ventilation hole 22d and the second ventilation hole 22e, foreign matter or the like can be prevented from entering the pressure receiving chamber Rc.

In this way, the pressure of the intake air is detected by the pressure sensor 20, and the temperature of the intake air is detected by the temperature sensor 30. The information respectively detected is incorporated as control information to an ECU, and the internal combustion engine E is appropriately controlled.

As described above, the sensor unit U is configured to include: the pressure sensor 20, detecting the pressure of the intake air in the intake pipe Ip; and the case 10, including the first accommodation part 13 and a communication path, the first accommodation part 13 accommodating the pressure sensor 20, the communication path providing communication between the pressure receiving chamber Rc of the pressure sensor 20 and the intake passage Ipi of the intake pipe Ip. The communication path is configured to include the first communication path Cp1 and the second communication path Cp2, the first communication path Cp1 having the predetermined passage length Lo, the second communication path Cp2 having the same passage length Lo as the first communication path Cp1 and including a region (second ventilation hole 22e) having passage area smaller than the passage area of the first communication path Cp1.

According to this, the passage resistance (pressure loss) of the second communication path Cp2 is greater than the passage resistance (pressure loss) of the first communication path Cp1. In comparison with the second communication path Cp2, in the first communication path Cp1, it is likely to generate a flow of intake air from the pressure receiving chamber Rc toward the intake passage Ipi. That is, since a trigger flow is generated in the first communication path Cp1, a flow is also generated in the second communication path Cp2 in conjunction with the trigger flow, and a flow is generated in the whole communication path.

Accordingly, in the regions of the first communication path Cp1, the pressure receiving chamber Rc, and the second communication path Cp2, stagnation of an intake air flow can be suppressed or prevented.

Hence, with respect to the pressure receiving chamber Rc, the intake air in the intake passage Ipi can be constantly supplied, entry of foreign matter can be suppressed or prevented, adhesion or freezing of a liquid or liquid-like substance such as fuel, moisture in intake air, and blow-by gas can be suppressed or prevented, and the pressure of the intake air can be detected with high accuracy by the pressure receiving part 21a.

In the above embodiment, as shown in FIG. 5 and FIG. 14, the end face 12c of the sleeve 12 of the sensor unit U is shown in the form of being attached so as to slightly protrude from an inner wall surface of the intake pipe Ip. However, the present disclosure is not limited thereto.

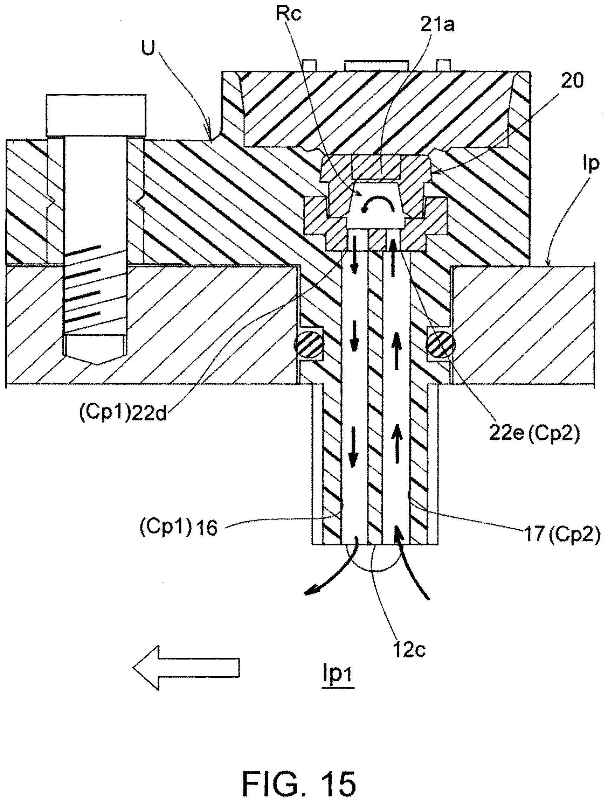

For example, the following form may be adopted. As shown in FIG. 15, the end face 12c of the sleeve 12 of the sensor unit U is arranged to protrude toward the center of the intake passage Ipi.

In general, the flow velocity of the intake air in the intake passage Ipi varies depending on the location. For example, the flow velocity increases in a central region and decreases in the vicinity of a wall surface. Since the first communication path Cp1 and the second communication path Cp2 open at the same end face 12c while being adjacent to each other, without being affected by the flow velocity, that is, the pressure, which depends on the location in the intake passage Ipi, an intake air flow can be generated only by a difference in passage resistance (pressure loss) between the first communication path Cp1 and the second communication path Cp2.

In the above embodiment, as a form in which a communication path includes a first communication path that has a predetermined passage length and a second communication path that has the same passage length as the first communication path and includes a region having passage area smaller than passage area of the first communication path, the following form is shown. The communication path includes the first communication path Cp1 and the second communication path Cp2, the first communication path Cp1 including the first passage 16 that has the predetermined passage area and the first ventilation hole 22d that leads to the first passage 16 and has the opening area smaller than the passage area of the first passage 16, the second communication path Cp2 including the second passage 17 that has the same passage length Ls and passage area as the first passage 16, and the second ventilation hole 22e that leads to the second passage 17 and has the opening area smaller than the opening area of the first ventilation hole 22d. However, the present disclosure is not limited thereto.

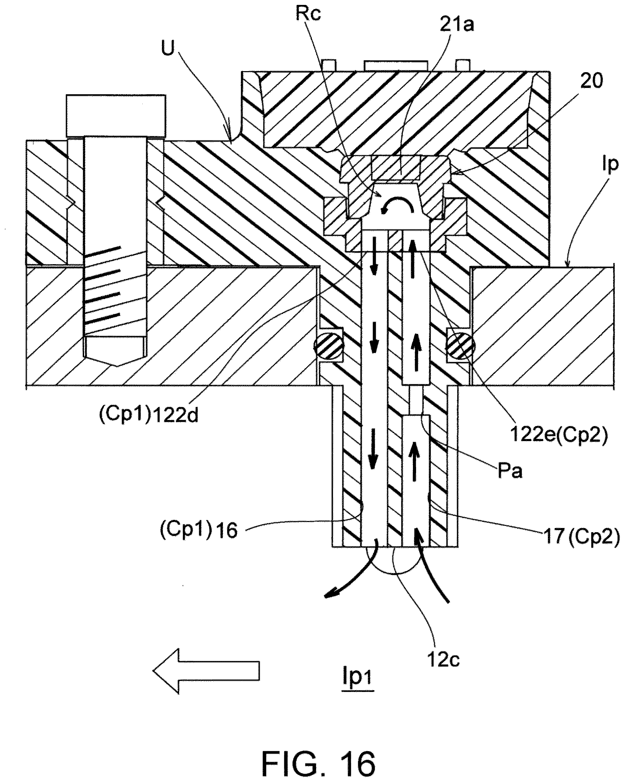

For example, the following form may be adopted. As shown in FIG. 16, a first ventilation hole 122d and a second ventilation hole 122e are formed to have the same opening area. In the middle of the second passage 17, a region Pa is formed having passage area smaller than the passage area (here, passage area of first passage 16 and opening area of first ventilation hole 122d) of the first communication path Cp1.

In this form, similarly to the above, the passage resistance (pressure loss) of the second communication path Cp2 is greater than the passage resistance (pressure loss) of the first communication path Cp1. In the first communication path Cp 1, a trigger flow is generated that is drawn out from the pressure receiving chamber Rc into the intake passage Ipi; in the second communication path Cp2, a follow-up flow is generated that flows from the intake passage Ipi into the pressure receiving chamber Rc.

In the above embodiment, as the first ventilation hole and the second ventilation hole, the first ventilation hole 22d and the second ventilation hole 22e formed in the sensor cover 22 are shown. However, the present disclosure is not limited thereto. A first ventilation hole and a second ventilation hole formed within a sleeve of a case may be adopted.

For example, the first ventilation hole may be provided at a position that divides the first passage in half, and the second ventilation hole may be provided at a position that divides the second passage in half.

As the first ventilation hole and the second ventilation hole, the first ventilation hole 22d and the second ventilation hole 22e being circular holes are shown. However, a first ventilation hole and a second ventilation hole in a form other than a circular hole may be adopted if the pressure loss of the second ventilation hole is greater than the pressure loss of the first ventilation hole.

In the above embodiment, the first communication path Cp1 and the second communication path Cp2 open to the intake passage Ipi in positions adjacent to each other, that is, the first passage 16 and the second passage 17 are formed to open while being adjacent to each other at an open end (end face 12c) of the sleeve 12. However, the present disclosure is not limited thereto. Other forms may be adopted if a difference in passage resistance (pressure loss) between the first communication path and the second communication path can be set without being affected by a flow velocity (pressure) distribution within the intake passage Ipi.

In the above embodiment, the sensor unit U includes, in addition to the pressure sensor 20, the temperature sensor 30 and the circuit board 40 that electrically connects the pressure sensor 20 and the temperature sensor 30. However, the present disclosure is not limited thereto. A sensor unit may be adopted in which the temperature sensor 30 is disused, and the circuit board 40 and the pressure sensor 20 are provided. Alternatively, a sensor unit may be adopted in which the temperature sensor 30 and the circuit board 40 are disused, and only the pressure sensor 20 is provided.

In the above embodiment, as a portion of the first communication path and the second communication path that provide communication between the pressure receiving chamber Rc of the pressure sensor 20 and the intake passage Ipi of the intake pipe Ip, the sensor unit U is shown which includes the sleeve 12 forming the first passage 16 and the second passage 17. However, the present disclosure is not limited thereto. A sensor unit equipped with a case including any other form than a sleeve may be adopted if the configuration includes the first communication path and the second communication path.

In the above embodiment, as a cylindrical sleeve protruding in the direction of the axis S from the case body 11, the sleeve 12 of a two-step cylindrical shape including the large-diameter cylindrical part 12a and the small-diameter cylindrical part 12b is shown. However, the present disclosure is not limited thereto. A cylindrical sleeve having the same outer diameter may be adopted.

In the above embodiment, as the pressure sensor, the pressure sensor 20 equipped with a semiconductor strain gauge is shown. However, the present disclosure is not limited thereto. A capacitance-type pressure sensor may be adopted, or a pressure sensor of any other type and forms may be adopted if including a pressure receiving part that receives the pressure of the intake air.

In the above embodiment, as the pressure sensor, the pressure sensor 20 including the sensor body 21 and the sensor cover 22 is shown. However, the present disclosure is not limited thereto. A pressure sensor without a sensor cover and with a pressure receiving part exposed to the outside may be adopted. In a first accommodation part in which the pressure sensor is accommodated, a pressure receiving chamber may be defined by the pressure sensor in cooperation with an inner wall surface of the first accommodation part of a case.

As described above, in the sensor unit of the present disclosure, entry of foreign matter can be suppressed or prevented, adhesion or freezing of a liquid or liquid-like substance such as fuel, moisture in intake air, and blow-by gas can be suppressed or prevented, and a state quantity (pressure, temperature) of the intake air can be detected with high accuracy. Thus, of course, the sensor unit of the present disclosure is applicable to an intake system of an internal combustion engine in an automobile, a motorcycle or the like, and is also useful in an internal combustion engine of any other vehicle.

### Description of Reference Numerals

E: internal combustion engine
C: combustion chamber
Ip: intake pipe
Ip₁: intake passage
Ac: air cleaner
M: throttle device
U: sensor unit
10: case
11: case body
11a: joint surface
12: sleeve
S: axis
12a: large-diameter cylindrical part
12b: small-diameter cylindrical part
12c: end face
12d: tip outer wall
13: first accommodation part
14: second accommodation part
15: third accommodation part
Cp1: first communication path
Cp2: second communication path
Lo: passage length of first communication path, passage length of second communication path
16: first passage (first communication path)
17: second passage (second communication path)
Ls: passage length of first passage, passage length of second passage
18: annular groove
19: connector
20: pressure sensor
Rc: pressure receiving chamber 21: sensor body
21a: pressure receiving part
21b: lead wire
21c: annular part
22: sensor cover
22a: bottom
22b: annular step part
22c: annular outer wall
22d: first ventilation hole (first communication path)
D₁: inner diameter of first ventilation hole
22e: second ventilation hole (second communication path)
D₂: inner diameter of second ventilation hole
30: temperature sensor
31: temperature sensing element
32: lead wire
40: circuit board
50: terminal
60: mold resin material
70: annular seal member

## Claims

1. A sensor unit (U), arranged in an intake pipe (Ip) of an internal combustion engine (E), **characterized by** comprising:
a pressure sensor (20), detecting a pressure of intake air in the intake pipe (Ip); and
a case (10), comprising a first accommodation part (13) and a communication path, the first accommodation part (13) accommodating the pressure sensor (20), the communication path providing communication between a pressure receiving chamber (Rc) of the pressure sensor (20) and an intake passage (Ipi) of the intake pipe (Ip), wherein
the communication path comprises a first communication path (Cp1) and a second communication path (Cp2), the first communication path (Cp1) having a predetermined passage length (Lo), the second communication path (Cp2) having the same passage length (Lo) as the first communication path (Cp1) and comprising a region having passage area smaller than passage area of the first communication path (Cp1).

2. The sensor unit (U) as claimed in claim 1, wherein
the first communication path (Cp1) comprises a first passage (16) and a first ventilation hole (22d), the first passage (16) having predetermined passage area, the first ventilation hole (22d) leading to the first passage (16) and having opening area smaller than the passage area of the first passage (16); and
the second communication path (Cp2) comprises a second passage (17) and a second ventilation hole (22e), the second passage (17) having the same passage length (Ls) and passage area as the first passage (16), the second ventilation hole (22e) leading to the second passage (17) and having opening area smaller than the opening area of the first ventilation hole (22d).

3. The sensor unit (U) as claimed in claim 2, wherein
the first ventilation hole (22d) and the second ventilation hole (22e) are formed as circular holes; and
an inner diameter (D₂) of the second ventilation hole (22e) is smaller than an inner diameter (D₁) of the first ventilation hole (22d).

4. The sensor unit (U) as claimed in claim 1, wherein
the first communication path (Cp1) and the second communication path (Cp2) are formed to open to the intake passage (Ipi) in positions adjacent to each other.

5. The sensor unit (U) as claimed in claim 2, wherein
the pressure sensor (20) comprises a sensor body (21) and a sensor cover (22), the sensor body (21) comprising a pressure receiving part (21a), the sensor cover (22) being connected to the sensor body (21) to cover the pressure receiving part (21a) and define the pressure receiving chamber (Rc); and
the first ventilation hole (22d) and the second ventilation hole (22e) are formed in the sensor cover (22).

6. The sensor unit (U) as claimed in claim 2, wherein
the first ventilation hole (22d) and the second ventilation hole (22e) are formed in an offset manner close to a side part outside a central region of the pressure receiving chamber (Rc).

7. The sensor unit (U) as claimed in claim 2, wherein
the case (10) comprises a case body (11) and a sleeve (12), the case body (11) comprising a joint surface (11a) joined to the intake pipe (Ip), the sleeve (12) having a cylindrical shape protruding in a predetermined axis (S) direction from the case body (11); and
the first passage (16) and the second passage (17) are formed to extend within the sleeve (12).

8. The sensor unit (U) as claimed in claim 7, wherein
the first passage (16) and the second passage (17) are formed to be adjacent to each other at an open end of the sleeve (12) and to open to the intake passage (Ipi).

9. The sensor unit (U) as claimed in claim 2, comprising:
a temperature sensor (30), detecting a temperature of the intake air in the intake pipe (Ip), wherein
the case (10) comprises a second accommodation part (14) that accommodates the temperature sensor (30).

10. The sensor unit (U) as claimed in claim 9, wherein
the case (10) comprises a case body (11) and a sleeve (12), the case body (11) comprising a joint surface (11a) joined to the intake pipe (Ip), the sleeve (12) having a cylindrical shape protruding in a predetermined axis (S) direction from the case body (11); and
the first passage (16), the second passage (17), and the second accommodation part (14) are formed to extend within the sleeve (12).

11. The sensor unit (U) as claimed in claim 10, wherein
the sleeve (12) comprises an end face (12c) and a tip outer wall (12d), the end face (12c) being where the first passage (16) and the second passage (17) open to the intake passage (Ipi), the tip outer wall (12d) being formed to protrude from the end face (12c) and defining an outer wall of the second accommodation part (14).

12. The sensor unit (U) as claimed in claim 9, comprising:
a circuit board (40), to which the pressure sensor (20) and the temperature sensor (30) are electrically connected, wherein
the case (10) comprises a third accommodation part (15) that accommodates the circuit board (40).

13. The sensor unit (U) as claimed in claim 12, wherein
the first accommodation part (13), the second accommodation part (14), and the third accommodation part (15), with the pressure sensor (20), the temperature sensor (30), and the circuit board (40) respectively arranged therein, are sealed by filling a mold resin material (60).

14. The sensor unit (U) as claimed in claim 13, wherein
the case (10) comprises a connector (19) that exposes and surrounds a plurality of terminals (50) connected to wiring on the circuit board (40) and is connected to the outside.

15. The sensor unit (U) as claimed in claim 1, wherein
the case (10) comprises a case body (11), a sleeve (12), and an annular groove (18), the case body (11) comprising a joint surface (11a) joined to the intake pipe (Ip), the sleeve (12) having a cylindrical shape protruding in a predetermined axis (S) direction from the case body (11), the annular groove (18) being formed on an outer periphery of the sleeve (12) and allowing an annular seal member (70) to be fitted therein.

16. The sensor unit (U) as claimed in claim 15, wherein
the sleeve (12) comprises a large-diameter cylindrical part (12a) continuous with the joint surface (11a) and a small-diameter cylindrical part (12b) continuous with the large-diameter cylindrical part (12a); and
the annular groove (18) is formed in the large-diameter cylindrical part (12a).

17. An intake system of an internal combustion engine (E), **characterized by** comprising:
an intake pipe (Ip), defining an intake passage (Ipi) that guides intake air to a combustion chamber (C) of the internal combustion engine (E);
a fuel injection valve (Iv), injecting fuel to middle of the intake passage (Ipi) or to the combustion chamber (C);
a throttle device (M), provided in middle of the intake pipe (Ip), opening and closing the intake passage (Ipi); and
a sensor unit (U), detecting a state quantity of the intake air, wherein
the sensor unit (U) is the sensor unit (U) as claimed in any one of claims 1 to 16.

18. The intake system of an internal combustion engine (E) as claimed in claim 17, wherein
the sensor unit (U) is arranged in the intake pipe (Ip) downstream of the throttle device (M).
